# EUROPEAN PATENT APPLICATION

(11) **EP 4 843 792 A1**
(43) Date of publication of application: **25.11.2026**
(21) Application number: 26180574.1
(22) Date of filing: 22.05.2026
(51) Int. Cl.: B60B 19/04

(54) **WHEEL WITH MOVABLE ELEMENTS**

(30) Priority: 22.05.2025 IT 202500011725
(71) Applicant: Belli, Andrea, 00118 Rome (IT)
(72) Inventor: BELLI, Andrea, 00118 Roma (RM) (IT); BELLI, Davide, 00118 Roma (RM) (IT); BELLI, Filippo, 00118 Roma (RM) (IT)
(74) Representative: IP Sextant s.r.l.

(57) **Abstract**

A wheel (1) having an axis (x-x) of rotation and a radius (R) of curvature, comprising: a main body (2), configured to rotate around the axis (x-x) of rotation of the wheel, and having one or more perimeter sections (21) in the form of a circumference arc, each with a radius of curvature corresponding to the radius (R) of curvature of the wheel, delimited between a first end (211) and a second end (212), which defines a section of the perimeter edge of the wheel; a transmission unit (3), rotatably mounted on the main body (2), around the axis (x-x) of rotation of the wheel; one or more arms (4), each arm (4) having at least one distal perimeter portion (40) that develops according to the same radius (R) of curvature of the wheel and extends between a first end (41) and a second end (42), wherein the first end (41) is pivoted to the main body (2), corresponding to the second end (212) of a respective perimeter section (21), along a first axis (I-I) of rotation parallel to the axis (x-x) of rotation of the wheel, so that the at least one arm (4) is configured to rotate around this first (I-I) rotation axis, and the second end (42) is connected to the transmission unit (3), and wherein each arm (4) can switch between a first working configuration, wherein the second end (42) of the arm (4) is positioned corresponding to the first end (211) of the respective perimeter section (21) and its distal perimeter portion (40) contributes to completing the substantially circular perimeter edge of the wheel (1), and a second working configuration wherein, due to a rotation of the transmission unit (3) around the axis (x-x) of rotation of the wheel, the second end (42) of the arm (4) is displaced until it is near the axis (x-x) of rotation of the wheel, and the distal perimeter portion (40) of the arm (4) defines a discontinuity in the perimeter edge of the wheel (1) by delimiting a respective engagement seat (5).

## Description

The present invention relates to a wheel and, more particularly, a wheel applicable to a means of transport for people or objects, including, for example, a wheelchair or a trolley.

The present invention also relates to a means of transport for people or objects, which includes such a wheel. In the present invention, explicit reference will be made to a wheelchair or a trolley, but a person skilled in the art will have no difficulty in understanding how the teachings of the present invention are easily and directly applicable also to other means of transport for one or more persons or objects, such as, for example, a stretcher, a pram, a stroller, a parallel-wheeled scooter, a two-wheeled robot, a wheelbarrow, etc. It is known that people with physical disabilities, who move by means of transport, such as a wheelchair, encounter various difficulties in their movements due to the presence of architectural barriers, which often prevent them from reaching a desired destination or make it extremely difficult. The simple overcoming of an obstacle such as a sidewalk or some step becomes very difficult not only for a person who independently drives their own wheelchair but also for an accompanying person, having to push the wheelchair over the obstacle by a third party, with the person on board. To solve this inconvenience, various types of transport means have been proposed, such as motorized wheelchairs (see, for example, US patent application US 2006/0038360 A1), equipped with movement groups that allow the overcoming of an obstacle such as a step or a sidewalk. Clawed wheels have also been proposed (such as, for example, described in CN115674949A) applicable to the aforementioned transport means, equipped with at least two arms rotatably mounted around the axis of rotation, in turn connected to a complex transmission gear, so that due to a rotation of the wheel hub around the wheel's axis, a radial displacement of the arms occurs relative to the wheel, thereby overall increasing the diameter of the wheel with portions shaped to overcome steps or obstacles.

Such solutions are costly and complex to implement.

Therefore, there is a need to improve the state of the art in the field of wheels for application to means of transport for people or objects, and the main purpose of the present invention is therefore to provide a wheel that is simple to manufacture, less prone to breakage compared to those of the known art, and that allows for reducing the difficulties of movement of a person transported on a means of transport such as, for example, a wheelchair, or of an object transported on a means of transport of the type mentioned above.

Another object of the present invention is to provide a means of transport capable of easily overcoming an obstacle such as a difference in level, for example a sidewalk or one or more steps.

The specific object of the present invention is a wheel having an axis of rotation and a radius of curvature, comprising:
- a main body, configured to rotate around the axis of rotation of the wheel, and having one or more perimeter sections in the shape of a circumference arc, each perimeter section with a radius of curvature corresponding to the radius of curvature of the wheel and delimited between a first end and a second end, each perimeter section defining a section of a perimeter edge of the wheel;
- a transmission unit, rotatably mounted on the main body, around the rotation axis of the wheel;
- one or more arms, each arm having at least one distal perimeter portion that develops according to the same radius of curvature of the wheel and extends between a first end and a second end, wherein

the first end is hinged to the main body, at the second end of a respective perimeter section, along a first rotation axis parallel to the rotation axis of the wheel, whereby the at least one arm is configured to rotate around such a first rotation axis, and
the second end is connected to the transmission unit, and wherein each arm can move between
   a first working configuration, wherein the second end of the arm abuts against the first end of the respective perimeter section, and the distal perimeter section thereof contributes to completing the perimeter edge of the wheel which is substantially circular, and
   a second working configuration wherein, due to a rotation of the transmission unit around the rotation axis of the wheel, the second end of the arm is moved until it is close the rotation axis of the wheel, and the distal perimeter portion of the arm defines a discontinuity in the perimeter edge of the wheel, delimiting a respective engagement seat.

According to another aspect of the invention, the transmission unit may comprise a hub, rotatably mounted around the rotation axis of the wheel and, for each arm, a connecting arm that is hinged on the hub, at a second rotation axis parallel to the rotation axis of the wheel, on one side, and on the other side, hinged at the second end of the respective arm by means of a connecting element of the same arm, at a third rotation axis.

According to a further aspect of the invention, each arm may comprise a connecting element, optionally a cursor, mounted at the second end, and the transmission unit may comprise a hub, rotatably mounted around the rotation axis of the wheel, and a cam integral with the hub or made in one piece therewith, in said cam a respective curved perimeter slot can bring formed for each arm, configured to receive the connecting element of the respective arm.

According to an additional aspect of the invention, each arm may comprise a connecting element, optionally a roller or idler pin, mounted at the second end of each arm, and the transmission unit may comprise:
- a hub, rotatably mounted on the rotation axis of the wheel, and a cam, integral with the hub or made in one piece therewith, the cam, for each arm, having a respective perimeter part with a radius of curvature variable between a maximum radius and a minimum radius, the perimeter part being in contact with the connecting element; and
- elastic loading elements, connected to the connecting element of each arm and configured to exert an elastic restoring force on the connecting element towards the rotation axis of the wheel, whereby
   due to the rotation of the hub, each arm can pass between
- the first working configuration, wherein the respective curved shaped perimeter part of the cam intercepts the connecting element of the arm at its maximum radius, and the second end of the arm is positioned at the first end of the respective perimeter section, and
- the second working configuration, wherein the respective curved shaped perimeter part of the cam intercepts the connecting element of the arm at a radius thereof between the minimum radius and the maximum radius and the second end of the arm is located in proximity to the rotation axis of the wheel, having been pulled towards it by the elastic loading elements.

According to another aspect of the invention, the elastic loading elements may comprise an elastic band between each connecting element of each arm and the rotation axis of the wheel.

According to a further aspect of the invention, when the wheel comprises one or more pairs of opposed arms, the elastic loading elements may comprise an elastic band between the connecting elements of each pair of opposed arms.

According to an additional aspect of the invention, when the wheel comprises one or more pairs of opposed arms, the elastic loading elements may comprise a pair of springs, each one mounted between the connecting element of one arm and a first pin of the wheel, at the first rotation axis of the other arm of the pair of opposed arms.

According to another aspect of the invention, the wheel may comprise elements for limiting the rotation of the transmission unit around the rotation axis of the main body, which are fixed to the main body of the wheel.

According to a further aspect of the invention, the limiting elements may comprise, for each arm, a limiting pin, and in the hub, a perimeter recess of such an extension may be provided for this purpose, of such an extension that, due to the rotation of the hub, when the limiting pin is located at one end of such perimeter recess, the arm is in the first working configuration and, when the limiting pin is located at the other end of said perimeter recess, the arm is in the second working configuration.

According to an additional aspect of the invention, the limiting elements may comprise, for each arm, a limiting pin and in the cam a respective central slot can be obtained such that, due to the rotation of the hub, when the limiting pin is located at one end of said central slot, the arm is in the first working configuration and, when the pin is located at the other end of said central slot, the arm is in the second working configuration.

According to another aspect of the invention, the wheel may comprise a closing shell, having the same configuration as the main body, which can be coupled to the latter at the respective at least one perimeter section, to delimit therewith a housing seat for the at least one arm and for the transmission unit.

The invention also specifically relates to a means of transport comprising at least one wheel as mentioned above, wherein said transport means is included among: a wheelchair, a stretcher, a pram, a stroller, a parallel-wheeled scooter, a trolley, a two-wheeled robot, a wheelbarrow.

The present invention will now be described, by way of illustration, but not limitation, according to its preferred embodiments, with particular reference to the Figures of the attached drawings, wherein:
Figure 1 shows a side perspective view, slightly from above, of a wheel according to a first embodiment of the present invention, the wheel being in a first working configuration;
Figure 2 illustrates another perspective view, slightly from above and with removed parts, of the wheel of Figure 1, taken from its other side and still in the first working configuration;
Figure 3 is a representation of the wheel of Figure 2, wherein some components have been removed, to better appreciate the structure of the wheel itself;
Figure 4 shows the wheel of Figure 3, in a second working configuration;
Figure 5 illustrates the wheel of Figure 4, in the second working configuration, with further parts removed to better appreciate its structure;
Figure 6 is a side representation of the wheel according to a second embodiment of the present invention, the wheel being shown in a first working configuration and with parts removed, to better appreciate its structure;
Figure 7 shows the wheel of Figure 6, in a second working configuration;
Figure 8 illustrates a side representation of a wheel according to a third embodiment of the present invention, the wheel being shown in a first working configuration and with parts removed, to better appreciate its structure;
Figure 9 is a representation of the wheel of Figure 8, in a second working configuration;
Figure 10 shows a side representation of a wheel according to a variant of the third embodiment of the present invention, the wheel being shown in a first working configuration and with parts removed to better appreciate its structure;
Figure 11 illustrates the wheel of Figure 10, in a second working configuration;
Figures 12a, 12b, 13a and 13b are representations of the main movement phases of a wheel according to any embodiment of the present invention;
Figures 14a, 14b, 15a and 15b show an example of a wheelchair equipped with wheels according to the present invention, in its main movement phases; and
Figures 16a, 16b, 17a and 17b represent an example of a trolley equipped with wheels according to the present invention, in its main movement steps.

In the Figures identical reference numbers will be used for similar elements.

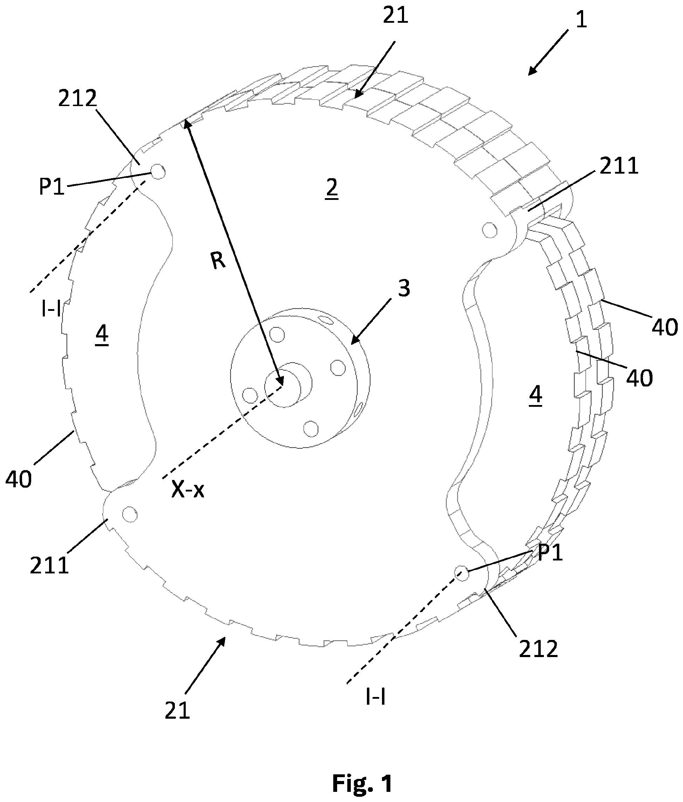

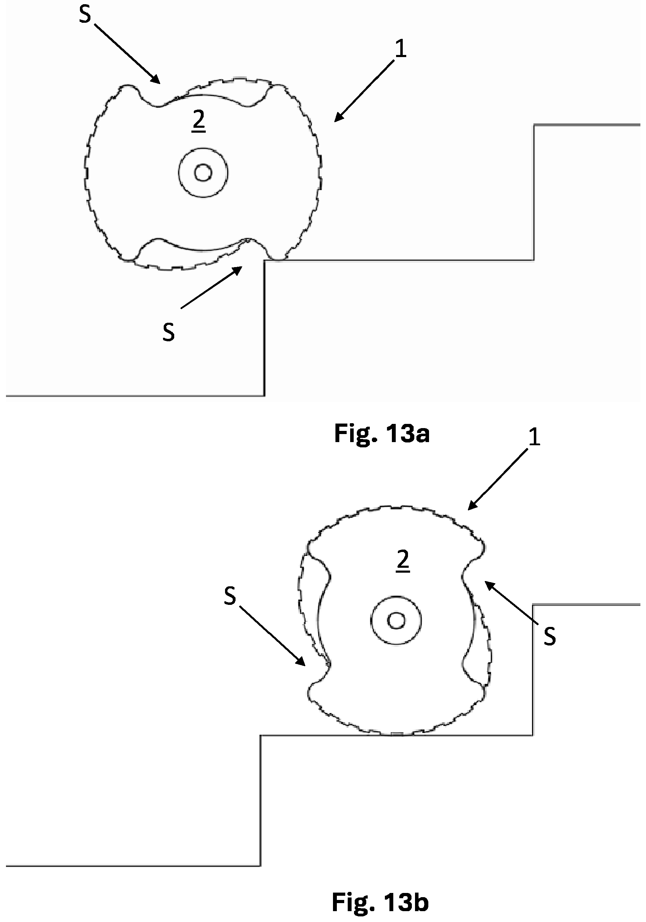

With particular reference to Figures 1 to 13b, it will be noted how a wheel, according to the present invention, is generally indicated with the reference number 1, has an x-x rotation axis and a radius R of curvature and comprises a main body 2, configured to rotate around rotation axis x-x of the wheel, and having one or more perimeter sections 21 in the shape of a circumference arc, each with a radius of curvature corresponding to the radius R of curvature of the wheel. Each perimeter section 21 is delimited between a first end 211 and a second end 212, also develops in a direction parallel to the rotation axis x-x of the wheel and defines a section of the perimeter edge of the wheel itself.

As can be seen in the attached Figures, each wheel 1 has a pair of opposing perimeter sections 21. In any case, a person skilled in the art will have no difficulty understanding how the wheel of the present invention can also be equipped with a single perimeter section 21, with a length between the semi-circumference of the wheel and the circumference thereof. Alternatively, the wheel of the present invention can also be equipped with three or more perimeter sections 21, for example uniformly distributed around the rotation axis x-x of the wheel.

The wheel 1 of the present invention also comprises a transmission unit 3, rotatably mounted on the main body 2, around rotation axis x-x of the wheel and one or more arms 4, in a number corresponding to the number of perimeter sections 21 of the main body 2. Each arm 4 of the present invention wheel 1 has a distal perimeter portion 40 which develops according to the same radius R of curvature of the wheel and extends between a first end 41 and a second end 42.
In the attached Figures, for ease of discussion, the depicted wheel is equipped with two arms 4 opposed to each other. In any case, a person skilled in the art will have no difficulty understanding how the wheel of the present invention can be equipped with a number of arms 4, provided that it corresponds to the number of perimeter sections 21 in an arc of circumference of the main body 2.

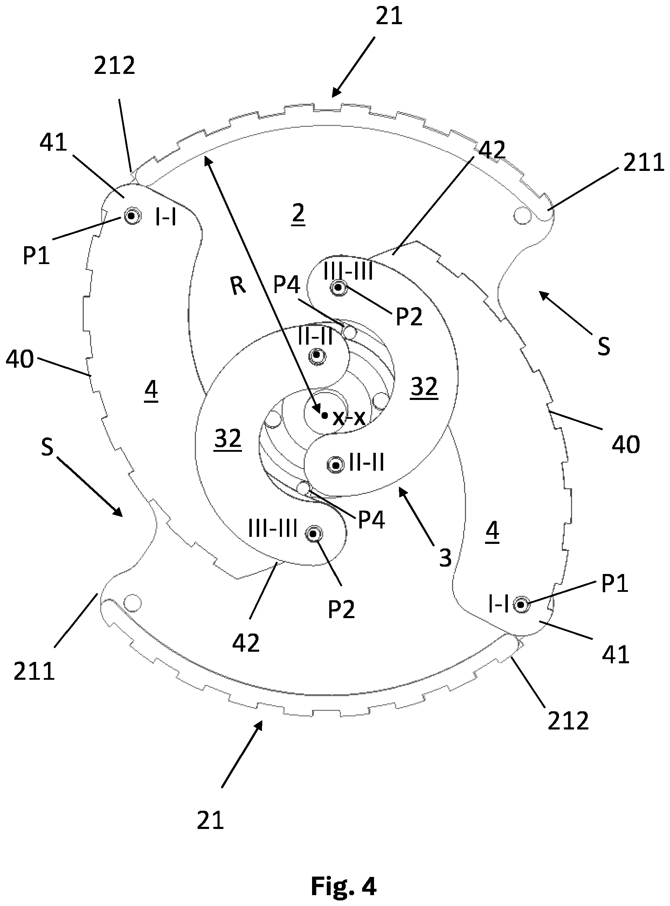

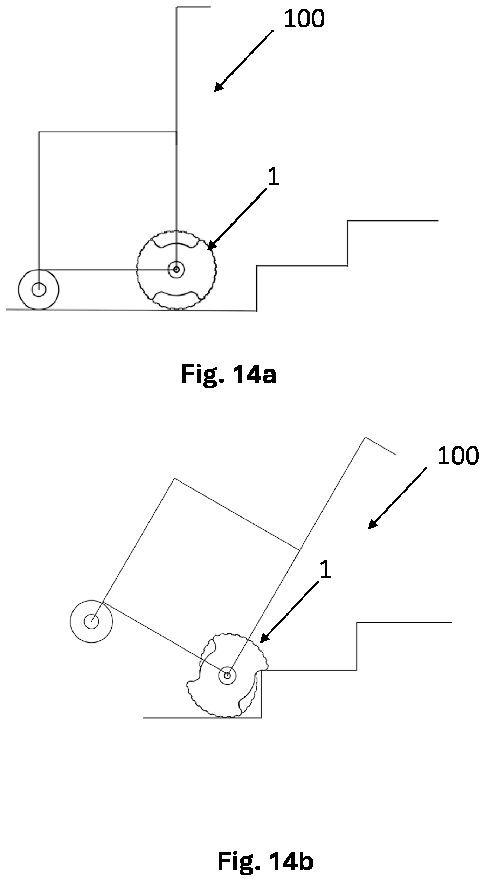

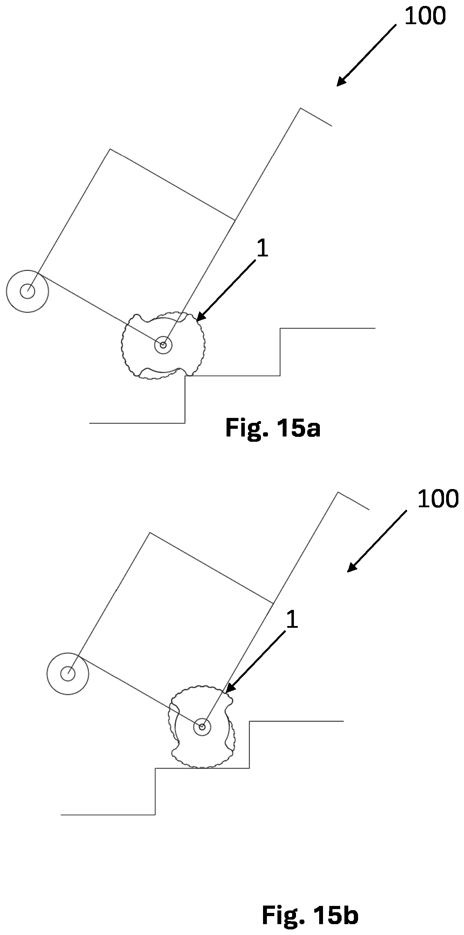

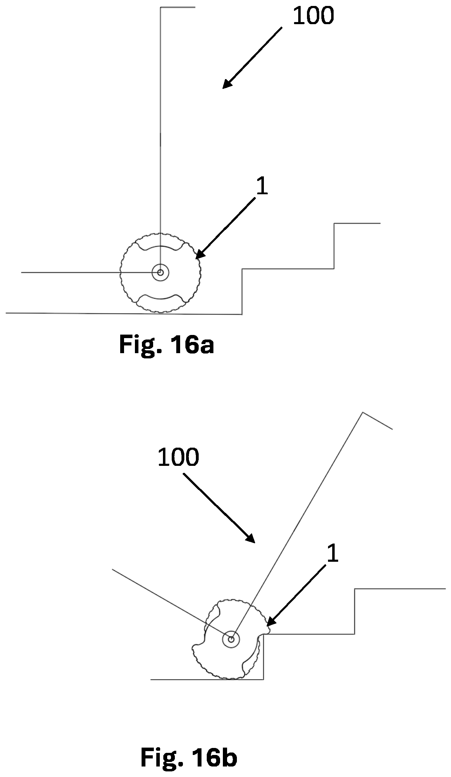

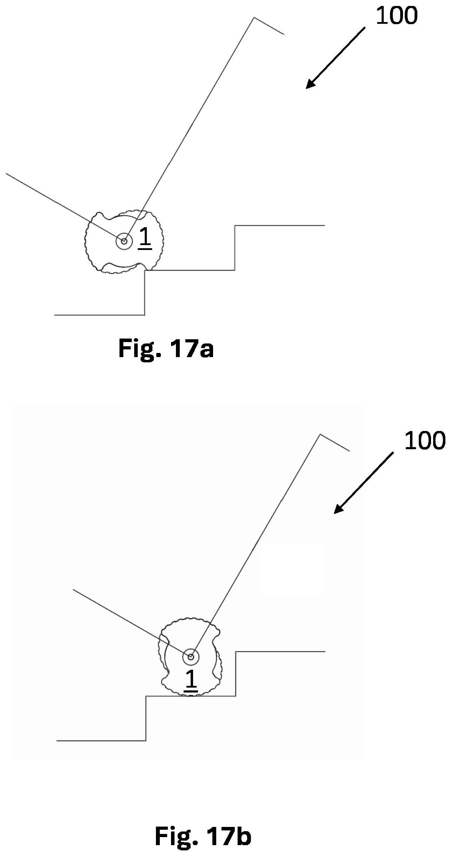

In wheel 1 of the invention, the first end 41 of each arm 4 is hinged to the main body 2, by means of a first pin P1 arranged along a first rotation axis I-I parallel to the rotation axis x-x of the wheel, corresponding to the second end 212 of a respective perimeter section 21, whereby each arm 4 is configured to rotate around this first rotation axis I-I. In the invention wheel 1 , the second end 42 of each arm 4 is connected to the transmission unit 3, by means of a connecting element P2 of arm 4, whereby each arm 4 can pass between:
- a first working configuration (Figures 1-4, 6, 8, 10, 12a, 14a, 16a), wherein the second end 42 of each arm 4 is positioned at the first end 211 of a respective perimeter section 21, and the distal perimeter portion 40 of that arm 4 contributes to completing the perimeter edge of wheel 1, which thus appears substantially circular, and
- a second working configuration (Figures 4, 5, 7, 9, 11, 12b, 13a, 13b, 14b, 15a, 15b, 16b, 17a and 17b) wherein, due to a rotation of the transmission unit 3 around the x-x rotation axis of the wheel, via the connecting element P2 and as will be better explained below, the second end 42 of arm 4 moves until it is close to the x-x rotation axis of the wheel, and the distal perimeter portion40 defines a discontinuity in the perimeter edge of wheel 1 that delimits a respective engagement seat S.

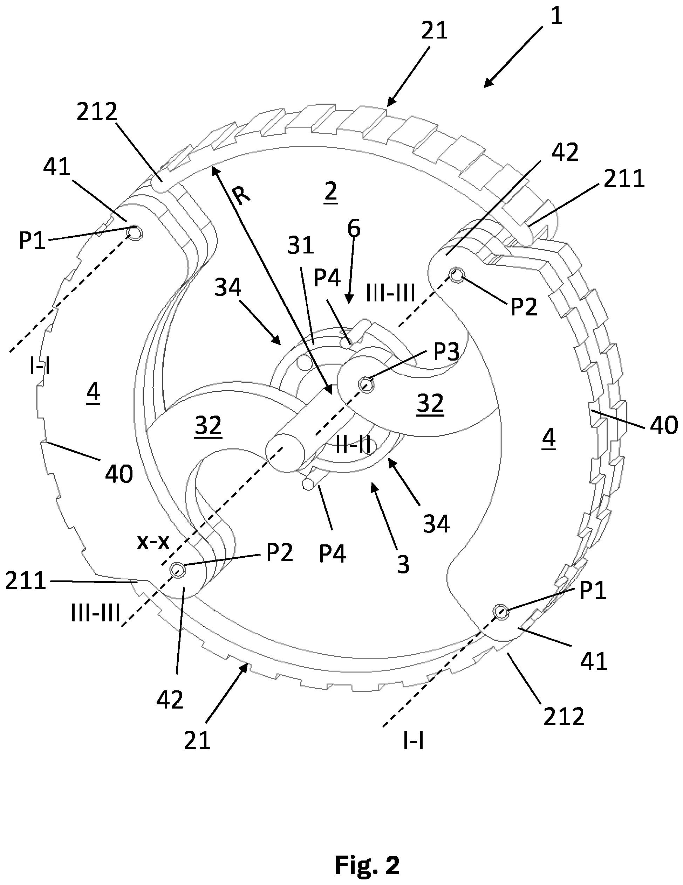

With particular reference to Figures 2 to 5, concerning a first embodiment of wheel 1 of the present invention, the transmission unit 3 comprises a hub 31, rotatably mounted around the x-x rotation axis of the wheel and, for each arm 4 (in the Figures, two opposed arms 4 are represented), a connecting arm 32, hinged on one side to the hub 31, by means of a specific pin P3, corresponding to a second rotation axis II-II parallel to the x-x rotation axis of the wheel and, on the other side, hinged to the second end 42 of the respective arm 4, by means of the connecting element P2, specifically another pin, corresponding to a third axis III-III of rotation. The connecting arm 32, in turn, is curved, so as not to interfere with the hub 31 during its movement.

The hub 31, in fact, is configured to be rotated in any suitable controlled manner, for example by a motor or manually, around the x-x rotation axis of the wheel.

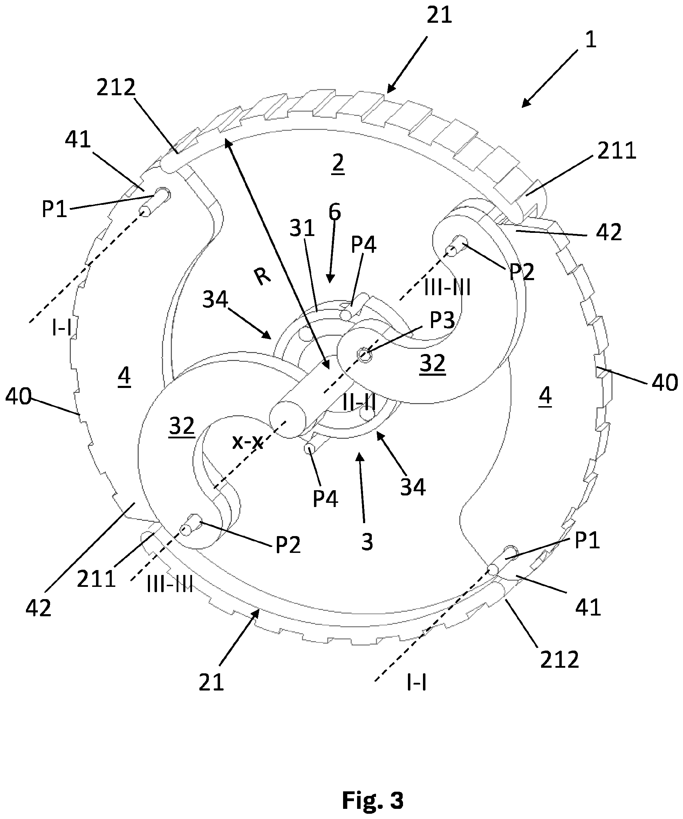

Each arm 4, according to a preferred embodiment of the invention, can be made in a single piece or, depending on the width of the wheel rim, can be made in multiple pieces. For example, as can be seen in Figures 3 to 5, arm 4 is made of two identical pieces, arranged on opposite sides with respect to the connecting arm 32, connected to the main body 2 and to the connecting arm 32 itself, as already described.

With such a wheel configuration, it is entirely evident that when each arm 4 of the wheel is in the first working configuration (Figures 2 and 3), a clockwise rotation (with respect to the plane of the attached figures) of the hub 31, around the x-x axis of the wheel 1, causes a counter-clockwise rotation of the connecting arm 32 around the second axis II-II of rotation, with consequent counter-clockwise rotation of arm 4 around the first axis I-I of rotation and the approach of the second end 42 of the arm 4 towards the x-x rotation axis of the wheel. As a result of this movement, the wheel presents a perimeter edge that is no longer circular, but rather defined for each arm by a respective engagement seat S.

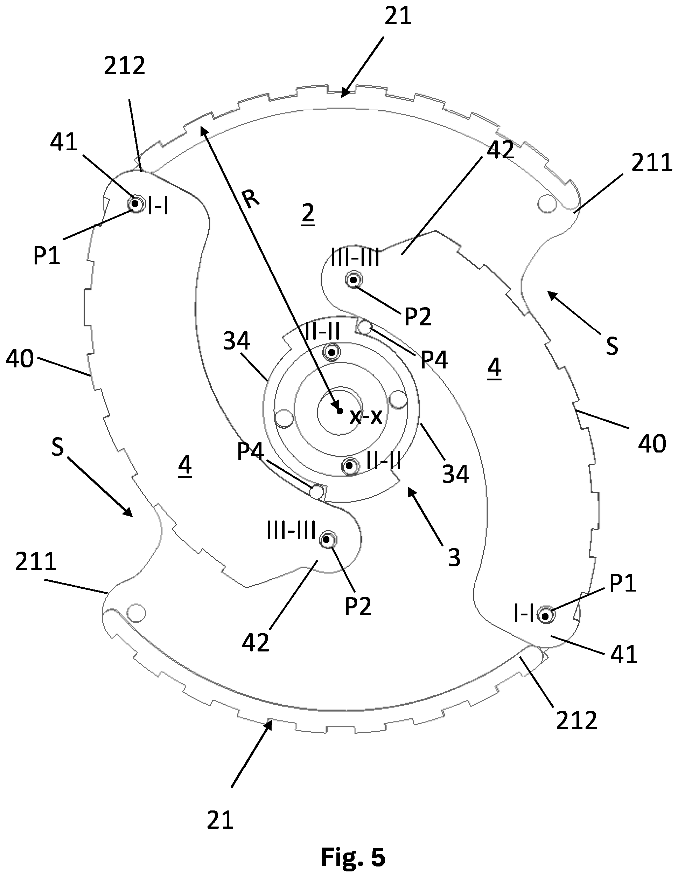

Conversely, when each arm 4 is in the second working configuration (Figures 4 and 5), a counter-clockwise rotation (with respect to the plane of the attached figures) of the hub 31, around the x-x rotation axis of wheel 1, causes a rotation in the opposite direction of the connecting arm 32 around the second axis II-II of rotation, with consequent clockwise rotation of arm 4 around the first axis I-I of rotation and movement away of the second end 42 of arm 4 from the x-x rotation axis of the wheel. As a result of this movement, when hub 31 has completed its rotation, the wheel presents a substantially circular perimeter edge.

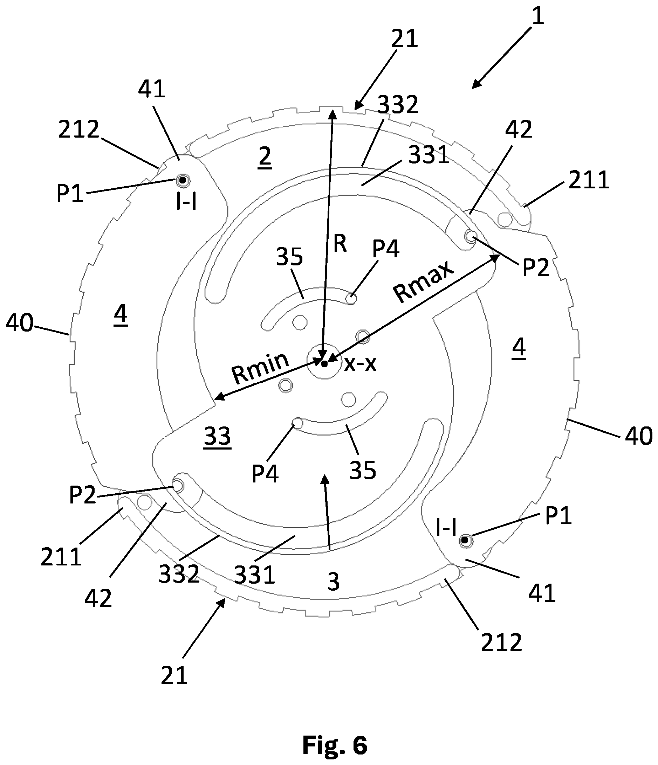

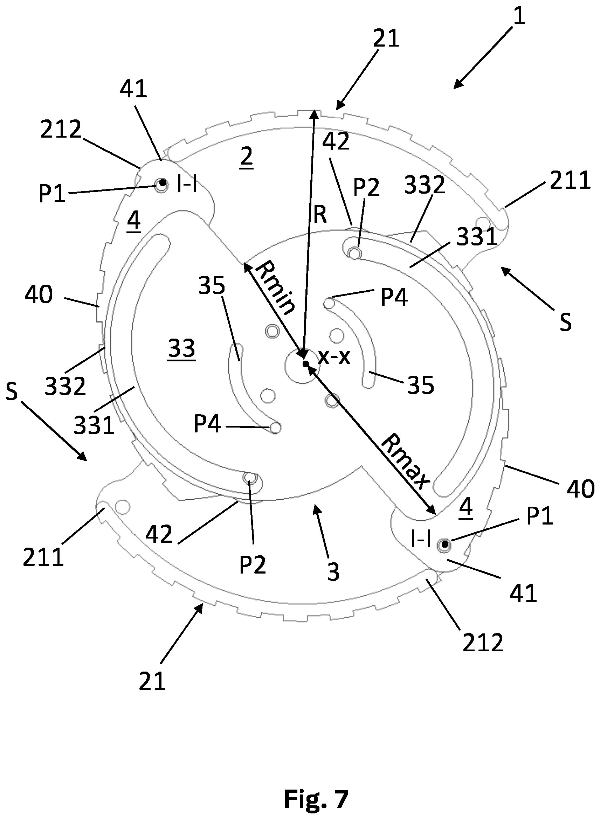

With particular reference to a second embodiment of wheel 1 of the present invention, represented in Figures 6 and 7, it will be noted that the transmission unit 3 comprises a hub (not visible in the figures), rotatably mounted around the x-x rotation axis of the wheel and a cam 33 integral with the hub or made in one piece therewith. Advantageously, in cam 33, for each arm 4 of wheel 1, a respective curved perimeter slot 331 is provided, configured to receive the connecting element P2 of the arm, specifically an idler pin, mounted at the second end 42.

Also in this case, the hub 31 is configured to be rotated in any suitable controlled manner, for example by means of a motor or manually, around the x-x rotation axis of the wheel, and each arm 4, according to this preferred embodiment of the invention, can be made in a single piece or, depending on the width of the wheel rim, can be made in multiple pieces. For example, each arm 4 can be made in two identical pieces (only one of which is shown in Figures 6 and 7), arranged on opposite sides with respect to cam 33 and connected to the main body 2 and to the cam 33, as described above, by means of the respective connecting element P2.

With such a configuration of the wheel, it is quite evident that when each arm 4 of the wheel is in the first working configuration (Fig. 6), a clockwise rotation (with respect to the plane of the attached figures) of the hub and, consequently, of the cam 33, causes a counter-clockwise rotation of arm 4 around the first axis I-I of rotation, and the approach of the second end 42 of arm 4 towards the x-x rotation axis of the wheel, due to the sliding of the slider P2 in its respective perimeter slot 331. As a result of this movement, the wheel presents a perimeter edge that is no longer circular, but rather defines, for each arm 4, a respective engagement seat S.

Conversely, when each arm 4 of wheel 1 is in the second working configuration (Fig. 7), a counter-clockwise rotation (with respect to the plane of the attached figures) of the hub and, consequently, of the cam 33, causes a clockwise rotation of arm 4 around the first axis I-I of rotation, and the distancing of the second end 42 of arm 4 from the x-x rotation axis of the wheel, due to the sliding of the slider P2 in its respective perimeter slot 331. As a result of this movement, when the hub has completed its rotation, the wheel presents a substantially circular perimeter edge.

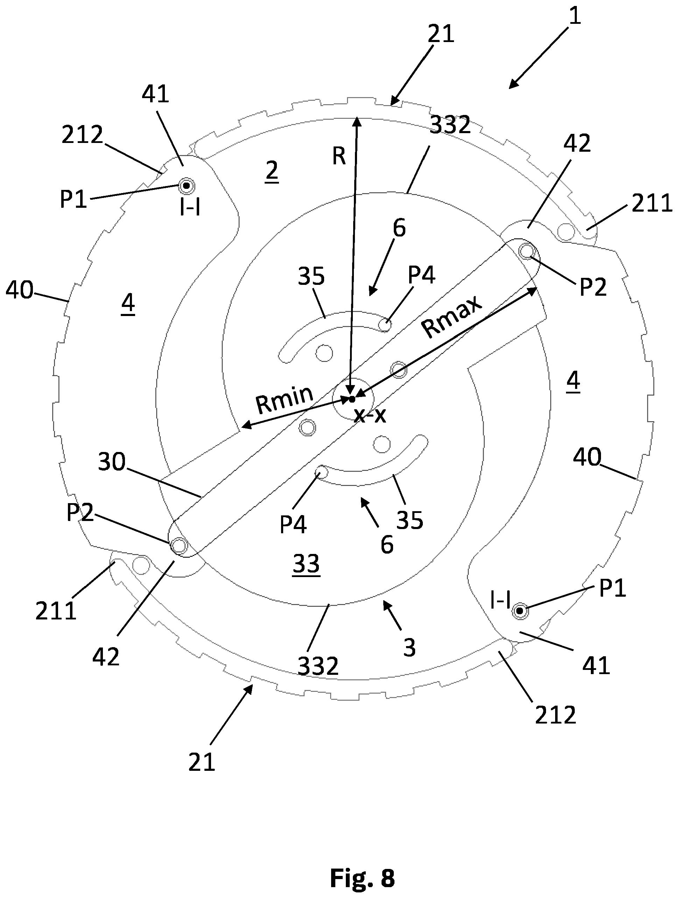

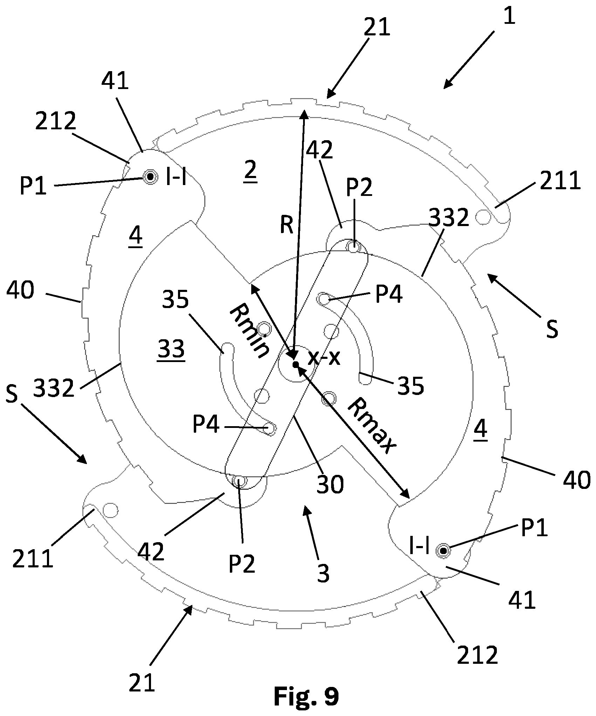

With particular reference now to Figures 8 and 9, concerning a third embodiment of wheel 1 of the present invention, it will be noted that the transmission unit 3 comprises:
- a hub, rotatably mounted on the x-x rotation axis of the wheel, and a cam 33, integral with the hub or made in one piece with it, the cam 33, for each arm 4, having a respective perimeter part 332 with a variable curvature radius, between a maximum radius Rmax and a minimum radius Rmin, the perimeter part 332 being in contact with the connecting element P2, namely a roller or idle pin mounted at the second end of arm 4; and
- elastic loading elements 30, connected to the connecting element P2 of each arm 4, which elastic loading elements exert an elastic return force on the connecting element P2 towards the x-x rotation axis of the wheel.

With such a configuration, it is quite evident that, due to the rotation of hub 31, each arm 4 can transition between:
- the first working configuration, wherein the respective curved perimeter part 332 of cam 33 intercepts the connecting element P2 of arm 4 at its maximum radius Rmax and the second end 42 of arm 4 is positioned at the first end 211 of the respective perimeter section 21, so that the rotation of arm 4 around its respective first axis I-I of rotation is prevented, and
- the second working configuration, wherein the respective curved perimeter part 332 of cam 33 intercepts the connecting element P2 of arm 4 at a radius between the maximum radius Rmax and the minimum radius Rmin and the second end 42 of arm 4 is located near the x-x rotation axis of the wheel, having been pulled towards it by the elastic loading elements 30.

According to a preferred embodiment of the third embodiment of the present invention, not shown in the attached Figures, the elastic loading elements 30 comprise an elastic band between each connecting element P2 of each arm 4 and the x-x rotation axis of the wheel.

According to another preferred embodiment of the third embodiment of the present invention, shown in Figures 8 and 9, when wheel 1 comprises one or more pairs of opposed arms 4 (specifically one pair, but the same applies to multiple pairs of opposed arms 4), the elastic loading elements 30 comprise an elastic band between the connecting elements P2 of each pair of opposed arms 4.

Also in this case, as for the previous ones, the hub is configured to be rotated in any suitable controlled manner, for example by means of a motor or manually, around the x-x rotation axis of the wheel, and each arm 4, according to this preferred embodiment of the invention, can be made in a single piece or, depending on the width of the wheel rim, can be made in multiple pieces. For example, each arm 4 can be made of two identical pieces (only one of which is shown in Figures 8 and 9), arranged on opposite sides with respect to the cam 33 and connected to the main body 2 and to the cam 33, as already described above, by means of the respective connecting element P2 and the elastic loading elements 30, which hold the connecting element P2 of each arm, adhering to the curved shaped perimeter part 332 of the cam 33.

With such a configuration of the wheel, it is quite evident that, when each arm 4 of the wheel is in the first working configuration (Fig. 8), a clockwise rotation (with respect to the plane of the attached figures) of the hub and, consequently, of the cam 33, causes a counter-clockwise rotation of the arm 4 around the first I-I rotation axis, and the approach of the second end 42 of the arm 4 towards the x-x rotation axis of the wheel, due to the sliding of the connecting element P2 along the respective curved shaped perimeter part 332 of the cam 33. As a result of this movement, the wheel presents a perimeter edge that is no longer circular but rather defined for each arm 4 by a respective engagement seat 5.

Conversely, when each arm 4 of the wheel is in the second working configuration (Fig. 9), a counter-clockwise rotation (with respect to the plane of the attached figures) of the hub 31 and, consequently, of the cam 33, causes a clockwise rotation of each arm 4 around the first I-I axis of rotation and the distancing of the second end 42 of arm 4 from the x-x rotation axis of the wheel, due to the force exerted by cam 33 on its connecting element P2 of the arm, which slides along its respective curved shaped perimeter part 332 of cam 33, remaining adherent due to the elastic loading elements 30. As a result of this movement, when the hub has completed its rotation, the wheel presents a substantially circular perimeter edge.

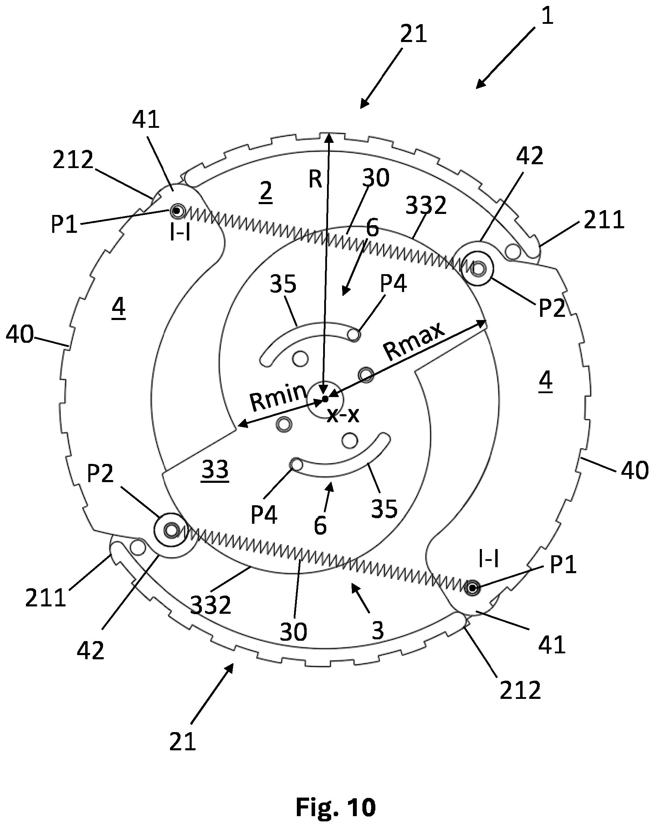

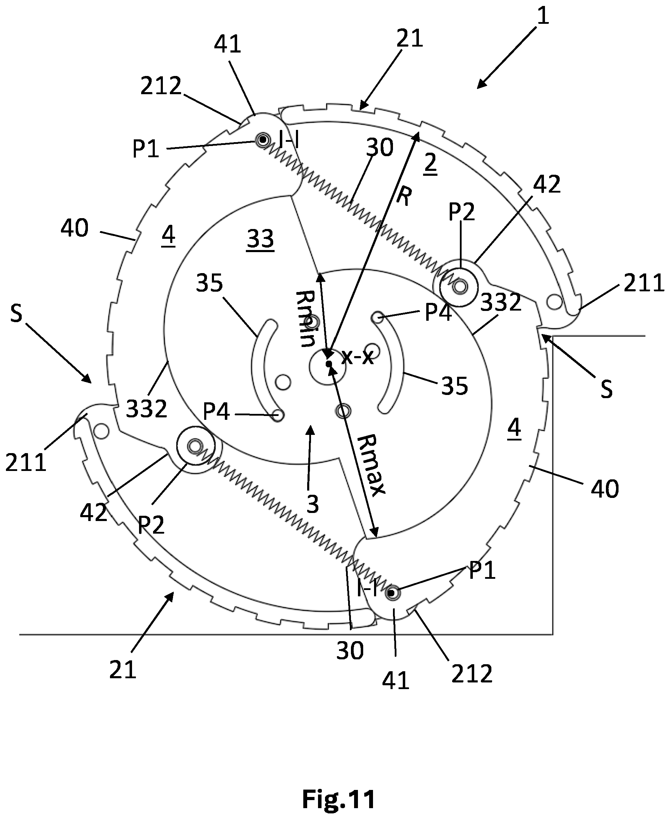

According to a variant of the third embodiment of wheel 1 of the present invention, represented in Figures 10 and 11, it will be noted how the elastic loading elements 30 of the transmission unit 3 comprise at least one spring.

According to a preferred embodiment of this variant , not represented in the attached figures, a spring can be connected between each connecting element P2 of each arm 4 and the x-x rotation axis of the wheel.

According to another preferred form of this variant of the third embodiment of the invention , represented in Figures 10 and 11, when the wheel comprises one or more pairs of opposed arms 4 (specifically a pair, but the same is also valid for more pairs of opposed arms 4), the elastic loading elements 30 comprise a couple of springs, each mounted between the connecting element P2 of an arm 4 and the first pin P1 of the other arm of the pair of opposed arms 4.

With such a configuration of the wheel, it is quite evident that, when each arm 4 of the wheel is in the first working configuration (Fig. 10), a clockwise rotation (with respect to the plane of the attached figures) of the hub and, consequently, of the cam 33, causes an counter-clockwise rotation of arm 4 around the first I-I rotation axis, and the approach of the second end 42 of arm 4 towards the x-x rotation axis of the wheel, due to the sliding of the connecting element P2 along its respective curved shaped perimeter part 332 of the cam 33 and the restoring force exerted by the springs. As a result of such movement, the wheel presents a perimeter edge that is no longer circular, but rather defines, for each arm 4, a respective engagement seat S.

Conversely, when each arm 4 of the wheel is in the second working configuration (Fig. 11), a counter-clockwise rotation (with respect to the plane of the attached figures) of the hub 31 and, consequently, of the cam 33, causes a clockwise rotation of each arm 4 around the first I-I rotation axis, and the distancing of the second end 42 of arm 4 from the x-x rotation axis of the wheel, due to the force exerted by the cam 33 on the connecting element P2 of the arm, which slides along its respective curved shaped perimeter part 332 of the cam 33, remaining adherent thereto by means of the elastic loading elements 30 (i.e., the springs). As a result of such movement, when the hub has completed its rotation, the wheel presents a substantially circular perimeter edge.

Advantageously, the wheel 1 according to any of the embodiments described above, comprises elements 6 for limiting the rotation of the transmission unit 3 around the x-x rotation axis of the main body 2.

Such limiting elements 6 are fixed to the main body 2 of the wheel 1 and, in the case of the first embodiment of the present invention, comprise, for each arm 4, a limiting pin P4, configured to abut against the hub 31, in which a perimeter recess 34 is provided for this purpose.

Such perimeter recess 34 extends such that, due to the rotation of the hub 31, when the limiting pin is located at one end of such perimeter recess 34, the arm 4 is in the first working configuration and, when the pin is located at the other end of said perimeter recess 34, the arm 4 is in the second working configuration.

In the case of the second and third embodiments, the limiting elements 6 comprise, for each arm 4, a limiting pin P4, and a respective central slot 35 configured to receive said pin is provided in cam 33 for this purpose.

The central slot 35 is configured in such a way that, due to the rotation of the hub, when the limiting pin P4 is located at one end of said central slot 35, the arm 4 is in the first working configuration and, when the pin is located at the other end of said central slot 35, the arm 4 is in the second working configuration.

The wheel described above can be advantageously incorporated into a means of transport (100, 1000), which also is the object of the present invention. Such a transport means is a transport means selected by way of example but not limitation from: a wheelchair, a stretcher, a pram, a stroller, a parallel-wheeled scooter, a trolley, a two-wheeled robot, a wheelbarrow.

In light of the above, it is clear that the wheel and the means of transport equipped with such a wheel offer numerous advantages and achieve the stated objectives.

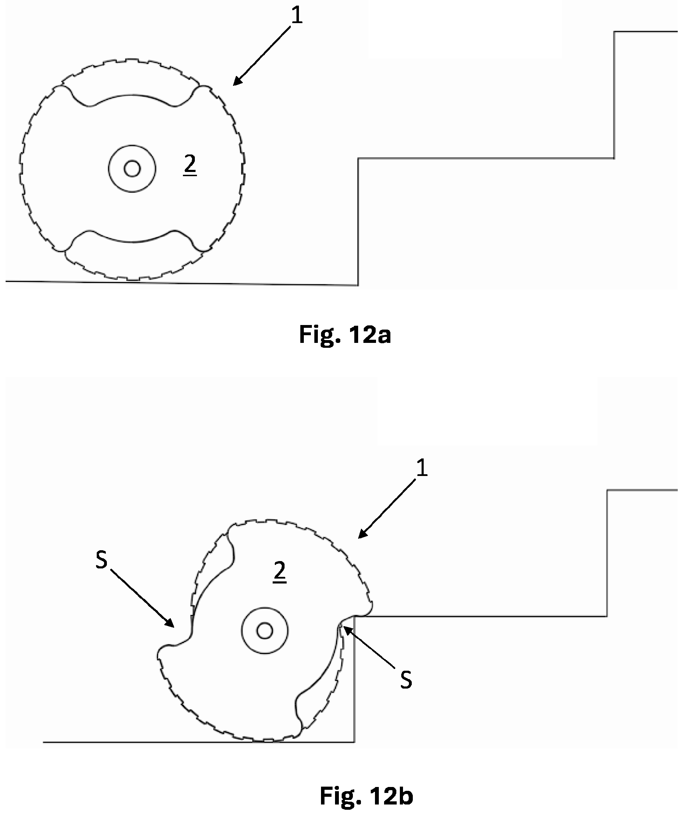

Indeed, the wheel 1 and the transport means (100, 1000) described above greatly facilitate overcoming an obstacle, as evident from Figures 12a to 17b, such as a sidewalk, one or more steps, while remaining compact, simple in their construction, and therefore easy to manufacture. It is sufficient, in fact, to operate the rotation of the hub 31 of the transmission unit in a known and controlled manner, to allow the arms 4 of the wheel to pass from the first to the second working configuration. In the second configuration, the wheel exposes the engagement seats S, thanks to which it can engage and overcome the obstacle.

In the foregoing, preferred embodiments have been described, and variants of the present invention have been suggested, but it is to be understood that those skilled in the art may make modifications and changes without thereby departing from the scope of protection, as defined by the appended claims.

Thus, for example, the wheel 1 according to any of the embodiments described above may comprise a closing shell, having the same configuration as the main body 2, which can be coupled thereto at each perimeter section 21, so as to define therewith a housing seat for each arm and for the transmission unit 3.

## Claims

1. Wheel (1) having a rotation axis (x-x) and a curvature radius (R), comprising:
- a main body (2), configured to rotate around the rotation axis (x-x) of the wheel, and having one or more perimeter sections (21) in the shape of a circumference arc, each perimeter section with a radius of curvature corresponding to the curvature radius (R) of the wheel and delimited between a first end (211) and a second end (212), each perimeter section defining a section of a perimeter edge of the wheel;
- a transmission unit (3), rotatably mounted on the main body (2), around the rotation axis (x-x) of the wheel;
- one or more arms (4), each arm (4) having at least one distal perimeter portion (40) which develops according to the same curvature radius (R) of the wheel and extends between a first end (41) and a second end (42), wherein
the first end (41) is hinged to the main body (2), at the second end (212) of a respective perimeter section (21), along a first rotation axis (I-I) parallel to the rotation axis (x-x) of the wheel, whereby the arm (4) is configured to rotate around such a first (I-I) rotation axis, and
the second end (42) is connected to the transmission unit (3), and wherein each arm (4) can move between
a first working configuration, wherein the second end (42) of the arm (4) abuts against the first end (211) of the respective perimeter section (21), and the distal perimeter portion (40) thereof contributes to completing the perimeter edge of the wheel (1) which is substantially circular, and
a second working configuration wherein, as a result of a rotation of the transmission unit (3) around the rotation axis (x-x) of the wheel, the second end (42) of the arm (4) is moved until it is close to the rotation axis (x-x) of the wheel, and the distal perimeter portion (40) of the arm (4) defines a discontinuity in the perimeter edge of the wheel (1), delimiting a respective engagement seat (S).

2. Wheel (1) according to claim 1, wherein the transmission unit (3) comprises a hub (31) rotatably mounted the rotation axis (x-x) of the wheel and, for each arm (4), a connecting arm (32) that is hinged on the hub (31), at a second rotation axis (II-II) parallel to the rotation axis (x-x) of the wheel, on one side, and hinged at the second end (42) of the respective arm (4) by means of a connecting element (P2) of the same arm (4), at a third rotation axis (III-III), on the other side.

3. Wheel (1) according to claim 1, wherein each arm (4) comprises a connecting element (P2), optionally a cursor, mounted at the second end (42), and wherein the transmission unit (3) comprises a hub (31), rotatably mounted around the rotation axis (x-x) of the wheel and a cam (33) integral with the hub (31) or made in one piece therewith, in said cam (33) being obtained, for each arm (4), a respective curved perimeter slot (331), configured to receive the connecting element (P2) of the respective arm (4).

4. Wheel (1) according to claim 1, wherein each arm (4) comprises a connecting element (P2), optionally a roller or an idler pin, mounted at the second end (42) of each arm (4), and wherein the transmission unit (3) comprises:
- a hub (31), rotatably mounted on the rotation axis (x-x) of the wheel and a cam (33), integral with the hub (31) or made in one piece therewith, the cam (33), for each arm (4), having a respective perimeter part (332) with radius of curvature variable between a maximum radius (Rmax) and a minimum radius (Rmin), the perimeter part (332) being in contact with the connecting element (P2); and
- elastic loading elements (30), connected to the connecting element (P2) of each arm and configured to exert an elastic restoring force of the connecting element (P2) towards the rotation axis (x-x) of the wheel, whereby
due to the rotation of the hub (31), each arm (4) can move between
- the first working configuration, wherein the respective curved shaped perimeter part (332) of the cam (33) intercepts the connecting element (P2) of the arm (4) at its maximum radius (Rmax) and the second end (42) of the arm (4) abuts against the first end (211) of the respective perimeter section (21), and
- the second working configuration, wherein the respective curved shaped perimeter part (332) of the cam (33) intercepts the connecting element (P2) of the arm (4) at a radius thereof between the minimum radius (Rmin) and the maximum radius (Rmax) and the second end (42) of the arm (4) is located in proximity to the rotation axis (x-x) of the wheel, having been pulled toward it by the elastic loading elements (30).

5. Wheel according to claim 4, wherein the elastic loading elements (30) comprise an elastic band between each connecting element (P2) of each arm and the rotation axis (x-x) of the wheel.

6. Wheel (1) according to claim 4, wherein when the wheel comprises one or more pairs of opposed arms (4), the elastic loading elements (30) comprise an elastic band between the connecting elements (P2) of each pair of opposed arms (4).

7. Wheel (1) according to claim 4, wherein when the wheel comprises one or more pairs of opposed arms (4), the elastic loading elements (30) comprise a pair of springs, each one mounted between the connecting element (P2) of an arm (4) and a first pin (P1) of the wheel, at the first rotation axis (I-I) of the other arm (4) of the pair of opposed arms (4).

8. Wheel (1) according to any previous claim, comprising limiting elements (6) for limiting the rotation of the transmission unit (3) around the rotation axis (x-x) of the main body (2), that are fixed to the main body (2) of the wheel (1).

9. Wheel (1) according to claim 8, when dependent upon claim 2, wherein the limiting elements (6) comprise, for each arm (4), a limiting pin (P4), and wherein in the hub (3) a perimeter recess (34) is obtained for this purpose, of such an extension that, due to the rotation of the hub (31), when the limiting pin (P4) is located at one end of such perimeter recess (34), the arm (4) is in the first working configuration and, when the limiting pin (P4) is located at the other end of such perimeter recess (34), the arm (4) is in the second working configuration.

10. Wheel (1) according to claim 9, when dependent upon claims 3 or 4, wherein the limiting elements (6) comprise, for each arm (4), a limiting pin (P4) and wherein in the cam (33) a respective central slot (35) is obtained such that, due to the rotation of the hub, when the limiting pin (P4) is at one end of said central slot (35), the arm (4) is in the first working configuration and, when the pin is at the other end of said central slot (35), the arm (4) is in the second working configuration.

11. Wheel (1) according to any previous claim, comprising a closing shell, having the same configuration as the main body (2), which can be coupled to the latter at the respective at least one perimeter section (21), to delimit therewith a housing seat for the at least one arm and for the transmission unit (3).

12. Transport means (100, 1000), comprising at least one wheel according to any previous claim, wherein said transport means is comprised among: a wheelchair, a stretcher, a pram, a stroller, a scooter with parallel wheels, a trolley, a two-wheeled robot, a wheelbarrow.
